# EUROPEAN PATENT SPECIFICATION

(11) **EP 3 672 128 B1**
(45) Date of publication and mention of the grant of the patent: **04.08.2021**
(21) Application number: 17924220.1
(22) Date of filing: 07.09.2017
(51) Int. Cl.: H04L 1/08, H04W 76/15

(54) **DATA TRANSMISSION METHOD, TERMINAL DEVICE AND NETWORK DEVICE**
DATENÜBERTRAGUNGSVERFAHREN, ENDGERÄTEVORRICHTUNG UND NETZWERKVORRICHTUNG
PROCÉDÉ DE TRANSMISSION DE DONNÉES, DISPOSITIF TERMINAL ET DISPOSITIF DE RÉSEAU

(43) Date of publication of application: 24.06.2020
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Penza, Giancarlo
(86) International application number: PCT/CN2017/100948
(87) International publication number: WO 2019/047123

(56) References cited:
- CN-A- 104 955 064
- VIVO: "Layer-2 behaviors of PDCP duplication activation deactivation", 3GPP DRAFT; R2-1708508_LAYER-2 BEHAVIORS OF PDCP DUPLICATION ACTIVATION DEACTIVATION, 3RD GENERATION PARTNERSHIP PROJECT (3GPP), MOBILE COMPETENCE CENTRE ; 650, ROUTE DES LUCIOLES ; F-06921 SOPHIA-ANT , vol. RAN WG2, no. Berlin, Germany; 20170821 - 20170825 20 August 2017 (2017-08-20), XP051318363, Retrieved from the Internet: URL:http://www.3gpp.org/ftp/Meetings_3GPP_ SYNC/RAN2/Docs/ [retrieved on 2017-08-20]
- LENOVO ET AL: "PDCP packet duplication", 3GPP DRAFT; R2-1708624, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051318450, Retrieved from the Internet: URL:http://www.3gpp.org/ftp/Meetings_3GPP_ SYNC/RAN2/Docs/ [retrieved on 2017-08-20]
- VICE-CHAIRWOMAN (INTERDIGITAL): "Report from LTE and NR User Plane Break-Out Session", 3GPP DRAFT; R2-1709663_NR_UP_LTE_BREAKOUT SESSION_25-08-17, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 27 August 2017 (2017-08-27), XP051330342, Retrieved from the Internet: URL:http://www.3gpp.org/ftp/tsg_ran/WG2_RL 2/TSGR2_99/Docs/ [retrieved on 2017-08-27]
- HUAWEI et al.: "Design of MAC CE for duplicate activation/deactivation", 3GPP TSG RAN WG2 #99, R2-1707712, 25 August 2017 (2017-08-25), XP051317673,
- NOKIA et al.: "MAC details on Duplication Activation/Deactivation", 3GPP TSG-RAN WG2 #99, R2-1708769, 25 August 2017 (2017-08-25), XP051318574,
- 3GPP: "3rd Generation Partnership Project; Technical Specification Group Radio Access Network; NR; Medium Access Control (MAC) protocol specification (Release 15)", 3GPP TS 38.321 V0.3.0, 31 August 2017 (2017-08-31), XP051330504,

## Description

### Technical Field

Implementations of the present application relate to a field of communication, and more particularly, relate to a method for transmitting data, a terminal device, and a network device.

### Background

In current discussion of New Radio (NR), for a bearer configured with a data duplication and transmission function, the data duplication and transmission function of the bearer may be dynamically activated or de-activated. For a case of multiple connections, multiple network devices may respectively indicate a terminal device to activate or de-activate a data duplication function of a bearer of the terminal. This may lead to different states of the data duplication function indicated by different network devices for same bearer. Therefore, a method is urgently needed to control the data duplication and transmission function of a certain bearer under the above scenario.

Related technologies are known from VIVO: "Layer-2 behaviors of PDCP duplication activation deactivation", 3GPP Draft, R2-1708508, August 20, 2017; LENOVO et al: "PDCP packet duplication", 3GPP Draft, R2-1708624, August 20, 2017; and VICE-CHAIRWOMAN (INTERDIGITAL): "Report from LTE and NR User Plane Break-Out Session", 3GPP Draft, R2-1709663, August 27, 2017.

### Summary

The present invention is defined by the appended claims. Embodiments of the invention are defined by the dependent claims. In view of this, the present application provides a method for transmitting data, a terminal device and a network device as defined in the attached independent claims, which are beneficial for improving performance of data transmission. Further improvements and embodiments are provided in the dependent claims.

In a first aspect, a method for transmitting data is provided. The method includes:
acquiring, by a terminal device, first transmission control information of each network device in multiple network devices, wherein first transmission control information of a first network device in the multiple network devices is used for indicating that a state of a data duplication and transmission function configured by the first network device for a first data radio bearer (DRB) is an active state, and first transmission control information of a second network device except the first network device in the multiple network devices is used for indicating that a state of the data duplication and transmission function configured by the second network device for the first DRB is an inactive state; and determining, by the terminal device, a target network device used for controlling the data duplication and transmission function of the first DRB as the first network device according to the first transmission control information of the each network device, herein after the terminal device determines that the target network device used for controlling the data duplication and transmission function of the first DRB is the first network device according to the transmission control information of the each network device, the method further comprises: acquiring, by the terminal device, second transmission control information of the first network device, wherein the second transmission control information is used for indicating a state of the data duplication and transmission function configured by the first network device for the first DRB; and controlling, by the terminal device, the data duplication and transmission function of the first DRB according to the second transmission control information.

Through cooperation between network devices, the terminal device can determine a valid network device for a data duplication and transmission function of a bearer, which is beneficial for subsequently controlling of the data duplication and transmission function of the bearer, and further beneficial for performance of data transmission.

The active state of the data duplication and transmission function refers that a Packet Data Convergence Protocol (PDCP) entity corresponding to a DRB may duplicate a PDCP Protocol Data Unit (PDU) into two copies, and the two copies are transmitted on two Radio Link Control (RLC) entities respectively. The inactive state of the data duplication and transmission function, in which the data duplication and transmission function is not used, that is, a PDCP PDU transmitted by a PDCP entity corresponding to a DRB is not duplicated data, and the PDCP PDU may be transmitted on one RLC entity one time.

The second network devices, which are all network devices except the first network device in the multiple network devices, and the multiple network devices may be all network devices that are capable of activating or de-activating a corresponding bearer.

In a possible implementation, after the terminal device determines the target network device used for controlling the data duplication and transmission function of the first DRB as the first network device according to the first transmission control information of the each network device, the method further includes: acquiring, by the terminal device, second transmission control information of the first network device, wherein the second transmission control information is used for indicating a state of the data duplication and transmission function configured by the first network device for the first DRB; and controlling, by the terminal device, the data duplication and transmission function of the first DRB according to the second transmission control information.

In a possible implementation, controlling, by the terminal device, the data duplication and transmission function of the first DRB according to the second transmission control information, includes: when the state indicated by the second transmission control information is an inactive state, controlling the first DRB to transmit non-duplicated data; when the state indicated by the second transmission control information is an active state, controlling the first DRB to transmit duplicated data.

In a possible implementation, the first transmission control information of the first network device indicates the state of the data duplication and transmission function configured by the first network device for the first DRB through a first bit in a bitmap, and acquiring, by the terminal device, the first transmission control information of the each network device in the multiple network devices, includes: receiving, by the terminal device, the bitmap sent by the first network device; and determining, by the terminal device, a value of the first bit corresponding to the first DRB in the bitmap as the first transmission control information of the first network device.

In a possible implementation, the first transmission control information of the first network device is carried in a media access control (MAC) signaling.

In a possible implementation, the multiple network devices include a network device in a primary cell group and a network device in a secondary cell group.

In a second aspect, a terminal device is provided, which is used for performing the method in the above first aspect or any possible implementation of the first aspect. Specifically, the terminal device includes units for performing the method of the above first aspect or the method in any possible implementation of the above first aspect.

These aspects and other aspects of the present application will be more easily understood from following descriptions of the implementations.

### Brief Description of Drawings

FIG. 1 is a schematic diagram of an application scenario according to an implementation of the present application.
FIG. 2 is a schematic diagram of protocol architecture of a data duplication and transmission mode in a dual-connection scenario.
FIG. 3 is a schematic block diagram of a method for transmitting data according to an implementation of the present application.
FIG. 4 is another schematic block diagram of a method for transmitting data according to an implementation of the present application.
FIG. 5 is a schematic block diagram of a terminal device used for transmitting data according to an implementation of the present application.
FIG. 6 is a schematic block diagram of a network device used for transmitting data according to an implementation of the present application.
FIG. 7 is another schematic block diagram of a terminal device according to an implementation of the present application.
FIG. 8 is another schematic block diagram of a network device according to an implementation of the present application.

### Detailed Description

Technical solutions in implementations of the present application will be clearly and completely described below with reference to the drawings in the implementations of the present application.

It should be understood, the technical solutions of the implementations of the present application may be applied to various communication systems, such as, a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, a Universal Mobile Telecommunication System (UMTS) or a Worldwide Interoperability for Microwave Access (WiMAX) communication system, a New Radio (NR) and a future Fifth-Generation (5G) system.

In particular, the technical solutions of the implementations of the present application may be applied to various communication systems based on non-orthogonal multiple access technologies, such as a Sparse Code Multiple Access (SCMA) system, and a Low Density Signature (LDS) system. Of course, the SCMA system and the LDS system may also be referred as other names in the communication field. Further, the technical solutions of the implementations of the present application may be applied to multicarrier transmission systems employing non-orthogonal multiple access technologies, such as an Orthogonal Frequency Division Multiplexing (OFDM) system based on the non-orthogonal multiple access technology, a Filter Bank Multi-Carrier (FBMC) system, a Generalized Frequency Division Multiplexing (GFDM) system, and a Filtered OFDM (F-OFDM) system, etc.

A terminal device in an implementation of the present application may be referred to a User Equipment (UE), an access terminal, a subscriber unit, a subscriber station, a mobile station, a mobile site, a remote station, a remote terminal, a mobile equipment, a user terminal, a terminal, a wireless communication equipment, a user agent or a user apparatus. An access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device or other processing device connected to a wireless modem, an on-board device, a wearable device, a terminal device in a future 5G network, or a terminal device in a Future Evolved Public Land Mobile Network (PLMN), etc., and implementations of the present application are not limited thereto.

A network device in an implementation of the present application may be a device for communicating with a terminal device. The network device may be a Base Transceiver Station (BTS) in a GSM system or a CDMA, or may be a NodeB (NB) in a WCDMA system, or may further be an Evolutional NodeB in an LTE system (eNB or eNodeB), or may further be a wireless controller in a scenario of a Cloud Radio Access Network (CRAN), or the network device may be a relay station, an access point, an on-board device, a wearable device, a network device in a future 5G network, or a network device in a future evolved PLMN network, etc., and implementations of the present application are not limited thereto.

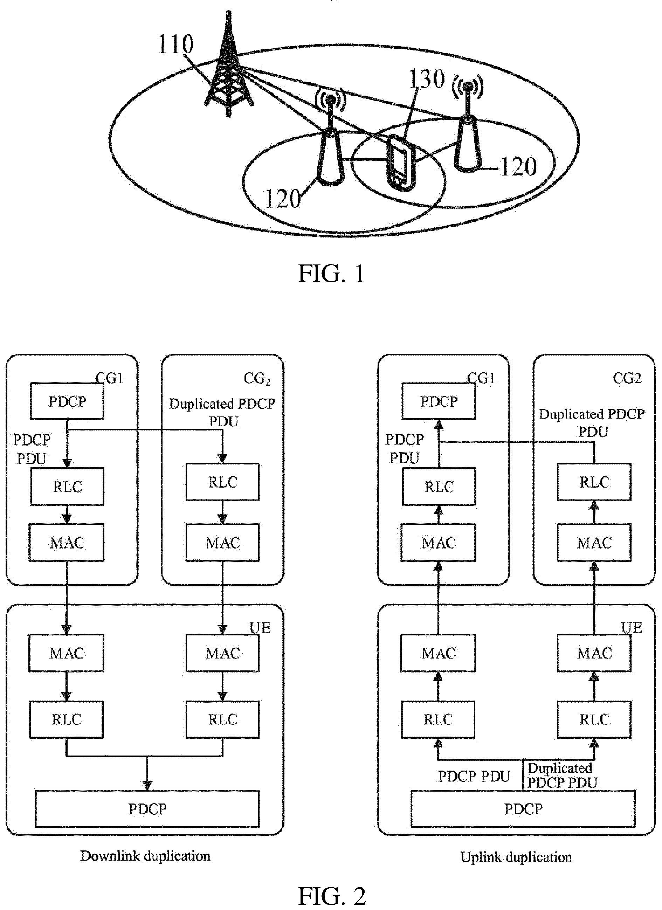

FIG. 1 is a schematic diagram of an application scenario of an implementation of the present application. Network devices around a terminal device 130 in FIG. 1 include a primary network device 110 and at least one secondary network device 120. The at least one secondary network device 120 is connected with the primary network device 110 respectively to form multiple connections, and is connected with the terminal device 130 to provide services respectively. The primary network device 110 may be an LTE network and the secondary network device 120 may be an NR network. Alternatively, the primary network device 110 may be an NR network and the secondary network device 120 may be an LTE network. Or both the primary network device 110 and the secondary network device 120 are NR networks. The present application does not limit the application scenario of the technical solution. The terminal device 130 may simultaneously establish a connection with the secondary network device 120 by the primary network device 110. The connection established between the terminal device 130 and the primary network device 110 is a primary connection, and the connection established between the terminal device 130 and the secondary network device 120 is a secondary connection. A control signaling of the terminal device 130 may be transmitted through the primary connection, while data of the terminal device may be transmitted simultaneously through the primary connection and the secondary connection, or may be transmitted only through the secondary connection.

In an implementation of the present application, the primary network device may be, for example, a Macrocell, and the secondary network device may be, for example, a Microcell, a Picocell, and a Femtocell, but implementations of the present application are not limited thereto.

More specifically, the primary network device may be an LTE network device and the secondary network device may be an NR network device. It should be understood that implementations of the present application are not limited to this. The primary network device may also be a GSM network device, a CDMA network device, etc. The secondary network device may be a GSM network device, a CDMA network device, etc. Implementations of the present application are not limited to this.

In a scenario of carrier aggregation, a Packet Data Convergence Protocol (PDCP) may support a data duplication function, i.e., using the data duplication function of the PDCP to make duplicated data correspond to two or more bearers, and finally it is ensured that the multiple duplicated PDCP Protocol Data Units (PDU) which are the same may be transmitted on different physical layer aggregated carriers, thus achieving frequency diversity gain to improve reliability of data transmission.

For ease of understanding, protocol architecture of data duplication and transmission mode in a dual-connection scenario will be briefly described below with reference to FIG. 2. In the data duplication and transmission mode, protocol architecture of split bearer is adopted. For uplink and downlink, the PDCP is located in a Cell Group (CG), which is an anchor CG, wherein the CG includes a primary cell group and a secondary cell group, and the PDCP duplicates the PDCP PDU into two same copies, such as one is a PDCP PDU and one is a duplicated PDCP PDU. Two PDCP PDUs pass through Radio Link Control (RLC) and Media Access Control (MAC) of different CGs, then reach a corresponding MAC layer and RLC layer of a terminal (downlink) or a base station (uplink) through an air interface, and finally converge to the PDCP. The PDCP layer monitors that the two PDCP PDUs are same duplicated versions, then discards one, and submit the other to a higher layer. This bearer connecting with two RLC and the MAC under the PDCP is called a split bearer.

In current discussion of New radio (NR), for a radio bearer configured with a data duplication and transmission function, the data duplication and transmission function of the radio bearer may be dynamically activated or de-activated by a Media Access Control (MAC) control element (CE). In a dual-connection scenario, a network device of a primary cell group and a network device of a secondary cell group may respectively send an MAC CE to activate or deactivate a data duplication function of a split bearer of the terminal. This may cause network devices of different primary cell groups and secondary cell groups to indicate different states for the data duplication function of a split bearer of the terminal. For example, the network device of the primary cell group indicates to activate the data duplication function of the split bearer while the network device of the secondary cell group indicates to de-activate the data duplication function of the split bearer. Therefore, how the terminal device controls the data duplication function of the split bearer in combination with configuration of the data duplication function of the multiple network devices for the same split bearer is a problem to be solved.

It should be understood that the terms "system" and "network" are often used interchangeably in this document. The term "and/or" in this document is merely an association relationship describing associated objects, indicating that there may be three relationships, for example, A and/or B may indicate three cases: A alone, A and B, and B alone. In addition, the symbol "/" in this document generally indicates that objects before and after the symbol "/" have an "or" relationship.

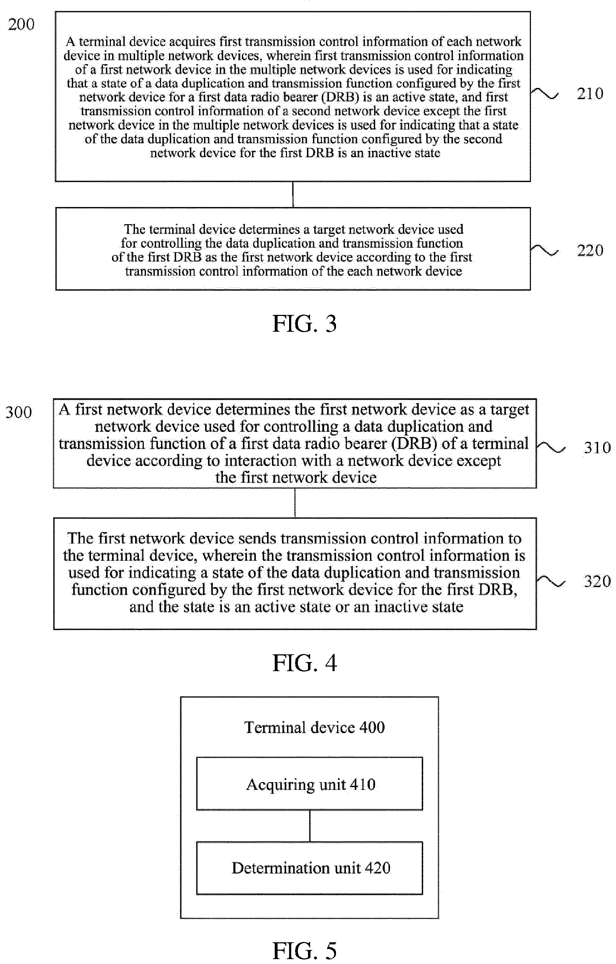

FIG. 3 is a schematic block diagram of a method 200 for transmitting data according to an implementation of the present application. As shown in FIG. 3, the method 200 includes some or all of the following contents.

In S210, a terminal device acquires first transmission control information of each network device in multiple network devices, wherein first transmission control information of a first network device in the multiple network devices is used for indicating that a state of a data duplication and transmission function configured by the first network device for a first data radio bearer (DRB) is an active state, and first transmission control information of a second network device except the first network device in the multiple network devices is used for indicating that a state of the data duplication and transmission function configured by the second network device for the first DRB is an inactive state.

In S220, the terminal device determines a target network device used for controlling the data duplication and transmission function of the first DRB as the first network device according to the first transmission control information of the each network device.

Specifically, the data duplication and transmission function of a bearer of the terminal device may be controlled between the network devices through cooperation of Xn interfaces.. In other words, the network devices may negotiate which network devices are responsible for controlling data duplication and transmission functions of corresponding bears in advance. For example, Data Radio Bearer (DRB) of the terminal device with identification (ID) of 1, 3, 4, or 7, respectively has a data duplication and transmission function. A network side (assuming that the network side includes a network device of a primary cell group and a network device of a secondary cell group) may enable the network device of the primary cell group to be responsible for opening or closing the data duplication and transmission function of DRBs with DRB IDs of 1 and 3, and enable the network device of the secondary cell group to be responsible for opening or closing the data duplication and transmission function of DRBs with DRB IDs of 4 and 7, through cooperation. That is, indication for a state of the data duplication and transmission function with DRB ID 1 sent by the network device of the primary cell group to the terminal device may be on or off, while indication for a state of the data duplication and transmission function with DRB ID 1 sent by the network device of the secondary cell group to the terminal device may only be off. Once the terminal device receives the indication for the state sent by one network device as on, then the terminal device may determine that the network device is a valid network device for controlling the data duplication and transmission function with DRB ID 1. In this way, after receiving indication for the state indicating the data duplication and transmission function with DRB ID 1, the terminal device may does not consider indication of other network devices, but may control the data duplication and transmission function with the DRB ID 1 only according to the indication of the determined valid network device .

Therefore, the method for transmitting data according to the implementations of the present application enables the terminal device to determine a valid network device for a data duplication and transmission function of a bearer through cooperation between network devices, which is beneficial for subsequently controlling the data duplication and transmission function of the bearer, and further beneficial for performance of data transmission.

The active state of the data duplication and transmission function refers that a PDCP entity corresponding to a DRB may duplicate a PDCP PDU into two copies and the two copies may be transmitted on two RLC entities respectively. The inactive state of the data duplication and transmission function, in which the data duplication and transmission function is not used, that is, the PDCP PDU transmitted by the PDCP entity corresponding to a DRB is not duplicated data, and may be transmitted in one RLC entity once.

It should be understood that the second network device in an implementation of the present application is all network devices except the first network device in the multiple network devices, and the multiple network devices may be all network devices that are capable of activating or de-activating a corresponding bearer.

Optionally, in an implementation of the present application, the acquired first transmission control information of a network device, may be the first transmission control information directly received from the network device, or may be a state of a data duplication and transmission function preconfigured by a network device for a bearer, which is stored in the terminal device.

Those skilled in the art should understand that the dual-connection mentioned in an implementation of the present application may also be multi-connection. Although, in the present application, dual-connection is taken as an example, implementations of the present application are not limited to this.

Optionally, the terminal device may maintain a control variable for each split bearer configured with a data duplication and transmission function. The terminal device may simultaneously receive indication information respectively sent by a primary network device and a secondary network device at a certain time. For the indication information, it is taken one bit as an example: at a certain time, the terminal device receives 1 sent by the primary network device and 0 sent by the secondary network device, wherein 1 may indicate that a data duplication and transmission function configured for a split bearer is an active state, and 0 may indicate that the data duplication and transmission function configured for the corresponding split bearer is an inactive state, then the terminal device may directly update the control variable to 10, and the terminal device may directly control the data duplication and transmission function of the corresponding split bearer according to 10, wherein an initial value of the control variable may be 00.

Optionally, the terminal device may also receive indication information sent by the primary network device and the secondary network device at different time. After receiving the indication information sent by one network device, the terminal device may not change a data duplication and transmission function of a corresponding split bearer, the terminal device updates the control variable together until receiving the indication information sent by another network device and controls the data duplication and transmission function of the corresponding split bearer according to the updated control variable.

Optionally, the terminal device may update the control variable after receiving the indication information sent by one network device, and directly control the data duplication and transmission function of the corresponding split bearer according to an updated control variable, wherein the control variable may have an initial value, for example, the initial value of the control variable may be 00.

Optionally, in an implementation of the present application, controlling, by the terminal device, the data duplication and transmission function of the first DRB according to the updated control variable, includes: the terminal device determines a target state of the data duplication and transmission function of the first DRB according to the updated control variable and a first mapping relationship table, wherein the first mapping relationship table includes mapping relationship between multiple state combinations and multiple target states, and each state in the state combinations corresponds to the multiple network devices one by one; and the terminal device controls the data duplication and transmission function of the first DRB according to the target state.

Specifically, the terminal device may store a mapping relationship table for each split bearer configured with a data duplication and transmission function in advance, and the mapping relationship table may include various state combinations of a corresponding split bearer that may be configured by all network devices that are capable of activating or de-activating and what target state the data duplication and transmission function of the corresponding split bearer should be set in various state combinations. An updated control variable of the terminal device is a state combination. The terminal device may look up a corresponding mapping relationship table according to the updated control variable, so as to find a corresponding target state, and then directly control the data duplication and transmission function of the corresponding split bearer according to the target state. In an example, one bit represents a state of a data duplication and transmission function configured by a network device for a split bearer, a mapping relationship table for the split beam may be table 1:

**Table 1**

| Primary network device | Secondary network device | Target state |
|---|---|---|
| 0 | 0 | Inactive |
| 0 | 1 | active |
| 1 | 0 | active |

It should be understood that since the primary network device and the secondary network device have negotiated a valid network device, the updated control variable may only be 00,01 or 00,10. For the terminal device, the terminal device does not known which network device is a valid network device at first, thus the state combinations in a stored mapping table may include three state combinations of 00, 01 and 10.

In an implementation of the present application, after the terminal device determines that the target network device used for controlling the data duplication and transmission function of the first DRB is the first network device according to the first transmission control information of the each network device, the method further includes: the terminal device acquires second transmission control information of the first network device, wherein the second transmission control information is used for indicating a state of the data duplication and transmission function configured by the first network device for the first DRB; and the terminal device controls the data duplication and transmission function of the first DRB according to the second transmission control information.

As mentioned above, once the terminal device determines a network device that controls a data duplication and transmission function of a bearer, the terminal device may subsequently control the data duplication and transmission function of the corresponding bearer only according to an indication sent by the determined network device.

Optionally, in an implementation of the present application, controlling, by the terminal device, the data duplication and transmission function of the first DRB according to the second transmission control information, includes when the state indicated by the second transmission control information is an inactive state, controlling the first DRB to transmit non-duplicated data; when the state indicated by the second transmission control information is an active state, controlling the first DRB to transmit duplicated data.

Optionally, in an implementation of the present application, the first transmission control information of the first network device indicates an state of the data duplication and transmission function configured by the first network device for the first DRB through a first bit in a bitmap, and acquiring, by the terminal device, the first transmission control information of the each network device in the multiple network devices, includes: the terminal device receives the bitmap sent by the first network device; and the terminal device determines a value of the first bit corresponding to the first DRB in the bitmap as the first transmission control information of the first network device.

In the present NR discussion, it has agreed to indicate the terminal device a DRB with a data duplication and transmission function through a bitmap, and the bitmap is 1 byte. Different positions in the bitmap respectively correspond to different bearer identifications(IDs) of a terminal, and bearers identified by these bearer IDs are bearers configured with a data duplication and transmission function. For example, bearer IDs of a terminal are 0, 2, 3, 7, 8, 10 are bearers configured with a data duplication and transmission function, and a correspondence relationship is that a first bit of a bitmap of a terminal corresponds to bearer ID 0, a second bit corresponds to bearer ID 2, a third bit corresponds to bearer ID 3, a fourth bit corresponds to bearer ID 7, a fifth bit corresponds to bearer ID 8, a sixth bit corresponds to bearer ID 10, and a seventh and eighth bits are invalid bits. This correspondence relationship may be an ascending correspondence relationship or a descending correspondence relationship.

After MAC of the terminal device receives the bitmap sent by a network device, the MAC of the terminal device may indicate a corresponding bit in the bitmap to a PDCP of a corresponding DRB. Specifically, the terminal device may find the corresponding bit of the DRB ID in the bitmap according to the correspondence relationship between the bitmap and the DRB ID, for example, the network device may map the DRB IDs 1, 3, 4, 7 with a data duplication and transmission function to 1, 2, 3, 4 bits in the bitmap respectively. After receiving the bitmap, the MAC of the terminal device may indicate a value of the first bit to a PDCP with DRB ID 1, a value of the second bit to a PDCP with DRB ID 3, and so on.

Optionally, in an implementation of the present application, the transmission control information is carried in a medium access control (MAC) signaling.

It should be understood that the various indication information of an implementation of the present application may also be carried by other signaling in addition to the MAC layer signaling mentioned above, such as Download Control Information (DCI).

It should also be understood that the above-mentioned multiple network devices are described by taking a network device of a primary cell group and a network device of a secondary cell group as examples, and implementations of the present application should not be limited thereto, for example, multiple network devices may be a network device of a primary cell group and network devices of multiple secondary cell groups.

It should also be understood that a bit in the above bitmap represents a state of a data duplication and transmission function of a bearer, and implementations of the present application should not be limited, for example, two bits may also be used for representing a state of a data duplication and transmission function of a bearer.

FIG. 4 is a schematic block diagram of a method 300 for transmitting data according to an implementation of the present application. As shown in FIG. 4, the method 300 includes some or all of the following contents.

In S310, a first network device determines that the first network device is a target network device used for controlling a data duplication and transmission function of a first data radio bearer (DRB) of a terminal device according to interaction with a network device except the first network device.

In S320, the first network device sends transmission control information to the terminal device, wherein the transmission control information is used for indicating a state of the data duplication and transmission function configured by the first network device for the first DRB, and the state is an active state or an inactive state.

Therefore, the method for transmitting data according to the implementation of the present application enables the terminal device to determine a valid network device for a data duplication and transmission function of a bearer through cooperation between the network devices, which is beneficial for a subsequently controlling of the data duplication and transmission function of the bearer, and further beneficial for performance of data transmission.

Optionally, in an implementation of the present application, the transmission control information indicates the state of the data duplication and transmission function configured by the first network device for the first DRB through a first bit in a bitmap.

Optionally, in an implementation of the present application, the first network device is a network device in a primary cell group.

It should be understood that interaction between the network device and the terminal device, and related characteristics, functions of the network device, etc., described by the network device correspond to related characteristics and functions of the terminal device. Moreover, the related contents have been described in detail in the above-mentioned method 200, and will not be repeated here for the sake of brevity.

It should be understood that in various implementations of the present application, values of sequence numbers in the aforementioned processes do not indicate an order of execution, and the order of execution of various processes should be determined by their functions and internal logics, and should not constitute any limitation on implementation processes of implementations of the present application.

Methods for transmitting data according to implementations of the present application have been described in detail above. Devices for transmitting data according to implementations of the present application will be described below with reference to FIGs. 5 to 8. Technical features described in the method implementations are applicable to following device implementations.

FIG. 5 is a schematic block diagram of a terminal device 400 according to an implementation of the present application. As shown in FIG. 5, the terminal device 400 includes an acquiring unit 410 and a determination unit 420.

The acquiring unit 410 is configured to acquire first transmission control information of each network device in multiple network devices, wherein first transmission control information of the first network device in the multiple network devices is used for indicating that a state of a data duplication and transmission function configured by the first network device for a first data radio bearer (DRB) is an active state, and first transmission control information of a second network device except the first network device in the multiple network devices is used for indicating that a state of the data duplication and transmission function configured by the second network device for the first DRB is an inactive state.

The determination unit 420, configured to determine a target network device used for controlling the data duplication and transmission function of the first DRB as the first network device according to the first transmission control information of the each network device.

Therefore, the terminal device of the implementation of the present application enables the terminal device to determine a valid network device for a data duplication and transmission function of a bearer through cooperation between the network devices, which is beneficial for subsequently controlling the data duplication and transmission function of the bearer, and further beneficial for performance of data transmission.

In an implementation of the present application, the acquiring unit is further configured to acquire second transmission control information of the first network device after acquiring the first transmission control information of the first network device, wherein the second transmission control information is used for indicating a state of the data duplication and transmission function configured by the first network device for the first DRB; and the terminal device further includes a control unit, configured to control the data duplication and transmission function of the first DRB according to the second transmission control information.

Optionally, in an implementation of the present application, the control unit is specifically configured to control the first DRB to transmit non-duplicated data when a state indicated by the second transmission control information is an inactive state; and control the first DRB to transmit duplicated data when a state indicated by the second transmission control information is an active state.

Optionally, in an implementation of the present application, the first transmission control information of the first network device indicates the state of the data duplication and transmission function configured by the first network device for the first DRB through a first bit in a bitmap, and the acquiring unit is specifically configured to: receive the bitmap sent by the first network device; and determine a value of the first bit in the bitmap corresponding to the first DRB bitmap as the first transmission control information of the first network device.

Optionally, in an implementation of the present application, the first transmission control information of the first network device is carried in a media access control (MAC) signaling.

It should be understood that the terminal device 400 according to the implementation of the present application may correspond to the terminal device in the method implementation of the present application, and the above-mentioned and other operations and/or functions of various units in the terminal device 400 are respectively for realizing the corresponding processes of the terminal device in the method shown in FIG. 3, and this will not be repeated here for sake of conciseness.

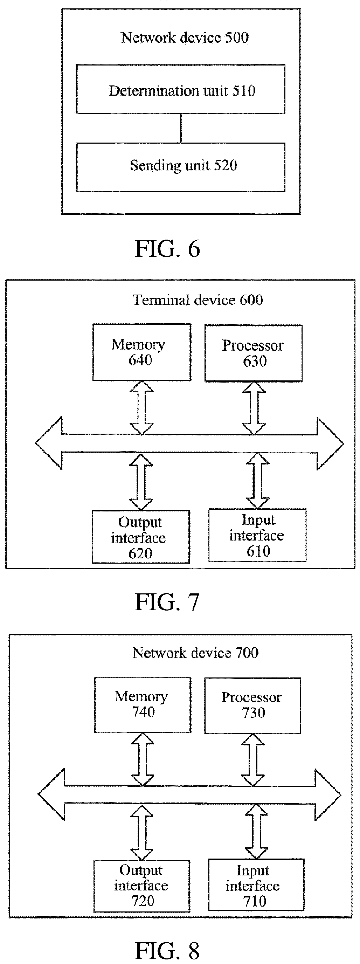

FIG. 6 is a schematic block diagram of a network device 500 according to an implementation of the present application. As shown in FIG. 6, the network device is a first network device and includes a determination unit 510 and a sending unit 520.

The determination unit 510 is configured to determine that the first network device is a target network device used for controlling a data duplication transmission function of a first data radio bearer (DRB) of a terminal device according to interaction with a network device except the first network device.

The sending unit 520 is configured to send transmission control information to the terminal device, wherein the transmission control information is used for indicating a state of the data duplication and transmission function configured by the first network device for the first DRB, and the state is an active state or an inactive state.

Therefore, the network device of the implementation of the present application enables the terminal device to determine a valid network device for a data duplication and transmission function of a bearer through cooperation between the network devices, which is beneficial for subsequently controlling the data duplication and transmission function of the bearer, and further beneficial for performance of data transmission.

Optionally, in an implementation of the present application, the transmission control information indicates the state of the data duplication and transmission function configured by the first network device for the first DRB through a first bit in a bitmap.

Optionally, in an implementation of the present application, the first network device is a network device in a primary cell group.

It should be understood that the network device 500 for transmitting data according to the implementation of the present application may correspond to the network device in the method implementations of the present application, and the above-mentioned and other operations and/or functions of various units in the network device 500 are respectively for realizing the corresponding processes of the network device in the method shown in FIG.4, and this will not be repeated here for sake of conciseness.

As shown in FIG. 7, an implementation of the present application further provides a terminal device 600. The terminal device 600 may be the terminal device 400 in FIG. 5, which may be used for performing contents of the terminal device corresponding to the method 200 in FIG. 3. The terminal device 600 includes an input interface 610, an output interface 620, a processor 630, and a memory 640. The input interface 610, the output interface 620, the processor 630, and the memory 640 may be connected through a bus system. The memory 640 is configured to store programs, instructions, or codes. The processor 630 is configured to execute the programs, instructions, or codes in the memory 640 to control the input interface 610 to receive signals, to control the output interface 620 to send signals, and to complete the operations in the foregoing method implementations.

Therefore, the terminal device of the implementation of the present application enables the terminal device to determine a valid network device for a data duplication and transmission function of a bearer through cooperation between the network devices, which is beneficial for a subsequently controlling of the data duplication and transmission function of the bearer, and further beneficial for performance of data transmission.

It should be understood that in an implementation of the present application, the processor 630 may be a Central Processing Unit (CPU), or the processor 630 may be other general purpose processor, a digital signal processor, an application specific integrated circuit, a field programmable gate array or other programmable logic device, a discrete gate or a transistor logic device, a discrete hardware component, etc. The general purpose processor may be a microprocessor, or the processor may be any conventional processor or the like.

The memory 640 may include a read-only memory and a random access memory, and provide instructions and data to the processor 630. A portion of memory 640 may include a non-volatile random access memory. For example, the memory 640 may also store information of device type.

In implementation processes, various contents of the methods described above may be accomplished by integrated logic circuits of hardware or instructions in the form of software in the processor 630. The contents of the method disclosed in connection with the implementations of the present application may be directly embodied to be accomplished by an execution of the hardware processor or by the combination of hardware and software modules in the processor. The software modules may be located in a storage medium commonly used in the art, such as a random access memory, flash memory, read-only memory, programmable read-only memory or electrically erasable programmable memory, or register. The storage medium is located in the memory 640, and the processor 630 reads the information in the memory 640, and accomplishes the contents of the above method in combination with its hardware. In order to avoid repetition, it will not be described in detail here.

In a specific implementation, the acquiring unit, the determination unit and the control unit in the terminal device 400 may be implemented by the processor 630 in FIG. 7.

As shown in FIG. 8, an implementation of the present application further provides a network device 700. The network device 700 may be the network device 500 in FIG. 6, which may be used for performing contents of the network device corresponding to the method 300 in FIG. 4. The network device 700 includes an input interface 710, an output interface 720, a processor 730, and a memory 740. The input interface 710, the output interface 720, the processor 730, and the memory 740 may be connected through a bus system. The memory 740 is configured to store programs, instructions, or codes. The processor 730 is configured to execute the programs, instructions, or codes in the memory 740 to control the input interface 710 to receive signals, to control the output interface 720 to send signals, and to complete the operations in the foregoing method implementations.

Therefore, the network device of the implementation of the present application enables the terminal device to determine a valid network device for a data duplication and transmission function through cooperation between the network devices, which is beneficial for subsequently controlling of the data duplication and transmission function, and further beneficial for performance of data transmission.

It should be understood that in an implementation of the present application, the processor 730 may be a Central Processing Unit (CPU), or the processor 730 may be other general purpose processor, a digital signal processor, an application specific integrated circuit, a field programmable gate array or other programmable logic device, a discrete gate or a transistor logic device, a discrete hardware component, etc. The general purpose processor may be a microprocessor, or the processor may be any conventional processor or the like.

The memory 740 may include a read-only memory and a random access memory, and provide instructions and data to the processor 730. A portion of memory 740 may include a non-volatile random access memory. For example, the memory 740 may also store information of device type.

In implementation processes, various contents of the methods described above may be accomplished by integrated logic circuits of hardware or instructions in the form of software in the processor 730. The contents of the method disclosed in connection with the implementations of the present application may be directly embodied to be accomplished by an execution of the hardware processor or by the combination of hardware and software modules in the processor. The software modules may be located in a storage medium commonly used in the art, such as a random access memory, flash memory, read-only memory, programmable read-only memory or electrically erasable programmable memory, or register. The storage medium is located in the memory 740, and the processor 730 reads the information in the memory 740, and accomplishes the contents of the above method in combination with its hardware. In order to avoid repetition, it will not be described in detail here.

In a specific implementation, the sending unit in the network device 500 may be implemented by the output interface 720 in FIG. 8, and the determination unit in the network device 500 may be implemented by the processor interface 730 in FIG. 8.

Those of ordinary skill in the art will recognize that the exemplary elements and algorithm acts described in combination with the implementations disclosed herein can be implemented in electronic hardware, or a combination of computer software and electronic hardware. Whether these functions are implemented in hardware or software depends on the specific application and design constraints of the technical solution. Skilled artisans may use different methods to implement the described functions in respect to each particular application, but such implementation should not be considered to be beyond the scope of the present application.

Those skilled in the art may clearly understand that for convenience and conciseness of description, the specific working processes of the systems, apparatuses and units described above may refer to the corresponding processes in the method implementations and will not be described here.

In several implementations provided by the present application, it should be understood that the disclosed systems, apparatuses and methods may be implemented in other ways. For example, the apparatus implementation described above is only illustrative, for example, the division of the unit is only a logical function division, and there may be other ways of division in actual implementation, for example, multiple units or components may be combined or integrated into another system, or some features may be ignored or not executed. On the other hand, the mutual coupling or direct coupling or communication connection shown or discussed may be indirect coupling or communication connection through some interface, apparatus or unit, and may be in electrical, mechanical or other forms.

The unit described as a separate component may or may not be physically separated, and the component shown as a unit may or may not be a physical unit, i.e., may be located in one place or may be distributed over multiple network units. Some or all of the units may be selected according to actual needs to achieve the purpose of the implementations.

In addition, various functional units in various implementations of the present application may be integrated in one processing unit, or the various units may be physically present separately, or two or more units may be integrated in one unit.

The functions may be stored in a computer readable storage medium if implemented in a form of software functional units and sold or used as a separate product. Based on this understanding, the technical solution of the present application, in essence, or the part contributing to the prior art, or the part of the technical solution, may be embodied in the form of a software product stored in a storage medium, including a number of instructions for causing a computer device (which may be a personal computer, a server, or a network device, etc.) to perform all or part of the acts of the method described in various implementations of the present application. The aforementioned storage medium includes various media capable of storing program codes, such as a U disk, a mobile hard disk, a read-only memory (ROM), a random access memory (RAM), a magnetic disk, or an optical disk.

What are described above are merely exemplary implementations of the present application, but the protection scope of the present application is not limited thereto. Any variation or substitution that may be easily conceived by a person skilled in the art within the technical scope disclosed by the present application shall be included within the protection scope of the present application. Therefore, the protection scope of the present application shall be subject to the protection scope of the claims.

## Claims

1. A method for transmitting data, comprising:
acquiring (S210), by a terminal device, first transmission control information of each network device in a plurality of network devices, wherein first transmission control information of a first network device in the plurality network devices is used for indicating that a state of a data duplication and transmission function configured by the first network device for a first data radio bearer, DRB, is an active state, and first transmission control information of a second network device except the first network device in the plurality of network devices is used for indicating that a state of the data duplication and transmission function configured by the second network device for the first DRB is an inactive state; and
determining (S220), by the terminal device, a target network device used for controlling the data duplication and transmission function of the first DRB as the first network device according to the first transmission control information of the each network device, **characterized in that** the method comprises: after the terminal device determines that the target network device used for controlling the data duplication and transmission function of the first DRB is the first network device according to the transmission control information of the each network device, the method further comprises:
acquiring, by the terminal device, second transmission control information of the first network device, wherein the second transmission control information is used for indicating a state of the data duplication and transmission function configured by the first network device for the first DRB; and
controlling, by the terminal device, the data duplication and transmission function of the first DRB according to the second transmission control information.

2. The method of claim 1, wherein controlling, by the terminal device, the data duplication and transmission function of the first DRB according to the second transmission control information, comprises:
controlling the first DRB to transmit non-duplicated data when the state indicated by the second transmission control information is an inactive state; and
controlling the first DRB to transmit duplicate data when the state indicated by the second transmission control information is an active state.

3. The method of claim 1, wherein the first transmission control information of the first network device indicates the state of the data duplication and transmission function configured by the first network device for the first DRB through a first bit in a bitmap, and acquiring (S210), by the terminal device, the first transmission control information of the each network device in the plurality of network devices, comprises:
receiving, by the terminal device, the bitmap sent by the first network device; and
determining, by the terminal device, a value of the first bit corresponding to the first DRB in the bitmap as the first transmission control information of the first network device.

4. The method of claim 3, wherein the first transmission control information of the first network device is carried in a medium access control, MAC, signaling.

5. The method of any one of claims 1 to 4, wherein the plurality network devices comprise a network device in a primary cell group and a network device in a secondary cell group.

6. A terminal device (400), comprising:
an acquiring unit (410), configured to acquire first transmission control information of each network device in a plurality of network devices, wherein first transmission control information of a first network device in the plurality of network devices is used for indicating that a state of a data duplication and transmission function configured by the first network device for a first data radio bearer, DRB, is an active state, and first transmission control information of a second network device except the first network device in the plurality of network devices is used for indicating that a state of the data duplication and transmission function configured by the second network device for the first DRB is an inactive state; and
a determination unit (420), configured to determine a target network device used for controlling the data duplication and transmission function of the first DRB as the first network device according to the first transmission control information of the each network device, **characterized in that** wherein the acquiring unit (410) is specifically configured to:
acquire second transmission control information of the first network device after acquiring the first transmission control information of the first network device, wherein the second transmission control information is used for indicating a state of the data duplication and transmission function configured by the first network device for the first DRB; and
the terminal device further comprises: a control unit, configured to control the data duplication and transmission function of the first DRB according to the second transmission control information.

7. The terminal device of claim 6, wherein the acquiring unit (410) is specifically configured to:
control the first DRB to transmit non-duplicated data when the state indicated by the second transmission control information is an inactive state; and
control the first DRB to transmit duplicated data when the state indicated by the second transmission control information is an active state.

8. The terminal device of claim 6 or 7, wherein the first transmission control information of the first network device indicates the state of the data duplication and transmission function configured by the first network device for the first DRB through a first bit in a bitmap, and the acquiring unit (410) is specifically configured to:
receive the bitmap sent by the first network device; and
determine a value of the first bit corresponding to the first DRB in the bitmap as the first transmission control information of the first network device.

9. The terminal device of claim 8, wherein the first transmission control information of the first network device is carried in a media access control, MAC, signaling.

## Patentansprüche

1. Verfahren zum Übertragen von Daten, umfassend:
Erfassen (S210), durch eine Endgerätevorrichtung, von ersten Übertragungssteuerinformationen jeder Netzwerkvorrichtung in mehreren Netzwerkvorrichtungen, wobei erste Übertragungssteuerinformationen einer ersten Netzwerkvorrichtung in den mehreren Netzwerkvorrichtungen verwendet werden, anzugeben, dass ein Zustand einer Datenvervielfältigungs- und - übertragungsfunktion, die durch die erste Netzwerkvorrichtung für einen ersten Datenfunkträger, DRB, konfiguriert ist, ein aktiver Zustand ist, und erste Übertragungssteuerinformationen einer zweiten Netzwerkvorrichtung in den mehreren Netzwerkvorrichtungen außer der ersten Netzwerkvorrichtung dazu verwendet werden, anzugeben, dass ein Zustand einer Datenvervielfältigungs- und - übertragungsfunktion, die durch die zweite Netzwerkvorrichtung für den ersten DRB konfiguriert ist, ein inaktiver Zustand ist; und
Bestimmen (S220), durch die Endgerätevorrichtung, einer Zielnetzwerkvorrichtung, die zum Steuern der Datenvervielfältigungs- und -übertragungsfunktion des ersten DRB verwendet wird, als die erste Netzwerkvorrichtung gemäß den ersten Übertragungssteuerinformationen der jeweiligen Netzwerkvorrichtung, **dadurch gekennzeichnet, dass** das Verfahren umfasst:
nachdem die Endgerätevorrichtung bestimmt, dass die Zielnetzwerkvorrichtung, die zum Steuern der Datenvervielfältigungs- und -übertragungsfunktion des ersten DRB verwendet wird, die erste Netzwerkvorrichtung gemäß den Übertragungssteuerinformationen der jeweiligen Netzwerkvorrichtung ist, das Verfahren ferner umfasst:
Erfassen von zweiten Übertragungssteuerinformationen der ersten Netzwerkvorrichtung durch die Endgerätevorrichtung, wobei die zweiten Übertragungssteuerinformationen zum Angeben eines Zustands der durch die erste Netzwerkvorrichtung für den ersten DRB konfigurierten Datenvervielfältigungs- und - übertragungsfunktion verwendet werden; und
Steuern, durch die Endgerätevorrichtung, der Datenvervielfältigungs- und -übertragungsfunktion des ersten DRB gemäß den zweiten Übertragungssteuerinformationen.

2. Verfahren nach Anspruch 1, wobei das Steuern durch die Endgerätevorrichtung der Datenvervielfältigungs- und -übertragungsfunktion des ersten DRB gemäß den zweiten Übertragungssteuerinformationen umfasst:
Steuern des ersten DRB, um nicht vervielfältigte Daten zu übertragen, wenn der durch die zweiten Übertragungssteuerinformationen angegebene Zustand ein inaktiver Zustand ist; und
Steuern des ersten DRB, um vervielfältigte Daten zu übertragen, wenn der durch die zweiten Übertragungssteuerinformationen angegebene Zustand ein aktiver Zustand ist.

3. Verfahren nach Anspruch 1, wobei die ersten Übertragungssteuerinformationen der ersten Netzwerkvorrichtung den Zustand der Datenvervielfältigungs- und -übertragungsfunktion, die durch die erste Netzwerkvorrichtung für den ersten DRB konfiguriert ist, durch ein erstes Bit in einer Bitmap anzeigt, und das Erfassen (S210) der ersten Übertragungssteuerinformationen jeder Netzwerkvorrichtung in den mehreren Netzwerkvorrichtungen durch die Endgerätevorrichtung umfasst:
Empfangen, durch die Endgerätevorrichtung, der von der ersten Netzwerkvorrichtung gesendeten Bitmap; und
Bestimmen, durch die Endgerätevorrichtung, eines Wertes des ersten Bits, das dem ersten DRB in der Bitmap entspricht, als die ersten Übertragungssteuerinformationen der ersten Netzwerkvorrichtung.

4. Verfahren nach Anspruch 3, wobei die ersten Übertragungssteuerinformationen der ersten Netzwerkvorrichtung in einer Mediumzugriffssteuersignalisierung, MAC-Signalisierung, übertragen werden.

5. Verfahren nach einem der Ansprüche 1 um 4, wobei die mehreren Netzwerkvorrichtungen eine Netzwerkvorrichtung in einer primären Zellengruppe und eine Netzwerkvorrichtung in einer sekundären Zellengruppe umfassen.

6. Endgerätevorrichtung (400), umfassend:
eine Erfassungseinheit (410), die dazu konfiguriert ist, erste Übertragungssteuerinformationen jeder Netzwerkvorrichtung in mehreren Netzwerkvorrichtungen zu erfassen, wobei erste Übertragungssteuerinformationen einer ersten Netzwerkvorrichtung in den mehreren Netzwerkvorrichtungen dazu verwendet werden, anzugeben, dass ein Zustand einer Datenvervielfältigungs- und - übertragungsfunktion, die durch die erste Netzwerkvorrichtung für einen ersten Datenfunkträger, DRB, konfiguriert ist, ein aktiver Zustand ist, und erste Übertragungssteuerinformationen einer zweiten Netzwerkvorrichtung in den mehreren Netzwerkvorrichtungen außer der ersten Netzwerkvorrichtung verwendet werden, anzugeben, dass ein Zustand einer Datenvervielfältigungs- und - übertragungsfunktion, die durch die zweite Netzwerkvorrichtung für den ersten DRB konfiguriert ist, ein inaktiver Zustand ist; und
eine Bestimmungseinheit (420), die dazu konfiguriert ist, eine Ziel-Netzwerkvorrichtung, die zum Steuern der Datenvervielfältigungs- und -übertragungsfunktion des ersten DRB verwendet wird, als die erste Netzwerkvorrichtung gemäß den ersten Übertragungssteuerinformationen jeder Netzwerkvorrichtung zu bestimmen, **dadurch gekennzeichnet, dass** wobei die Erfassungseinheit (410) dazu konfiguriert ist:
zweite Übertragungssteuerinformationen der ersten Netzwerkvorrichtung nach dem Erfassen der ersten Übertragungssteuerinformationen der ersten Netzwerkvorrichtung zu erfassen, wobei die zweiten Übertragungssteuerinformationen zum Angeben eines Zustands der durch die erste Netzwerkvorrichtung für den ersten DRB konfigurierten Datenvervielfältigungs- und Übertragungsfunktion verwendet werden; und
die Endgerätevorrichtung ferner umfasst: eine Steuereinheit, die dazu konfiguriert ist, die Datenvervielfältigungs- und Übertragungsfunktion des ersten DRB gemäß den zweiten Übertragungssteuerinformationen zu steuern.

7. Endgerätevorrichtung nach Anspruch 6, wobei die Erfassungseinheit (410) insbesondere dazu konfiguriert ist:
den ersten DRB zu steuern, um nicht vervielfältigte Daten zu übertragen, wenn der durch die zweiten Übertragungssteuerinformationen angegebene Zustand ein inaktiver Zustand ist; und
den ersten DRB zu steuern, um vervielfältigte Daten zu übertragen, wenn der durch die zweiten Übertragungssteuerinformationen angegebene Zustand ein aktiver Zustand ist.

8. Endgerätevorrichtung nach Anspruch 6 oder 7, wobei die ersten Übertragungssteuerinformationen der ersten Netzwerkvorrichtung den Zustand der durch die erste Netzwerkvorrichtung für den ersten DRB konfigurierten Datenvervielfältigungs- und Übertragungsfunktion durch ein erstes Bit in einer Bitmap angeben und die Erfassungseinheit (410) insbesondere dazu konfiguriert ist:
die von der ersten Netzwerkvorrichtung gesendete Bitmap zu empfangen; und
einen Wert des ersten Bits, das dem ersten DRB in der Bitmap entspricht, als die ersten Übertragungssteuerinformationen der ersten Endgerätevorrichtung zu bestimmen.

9. Endgerätevorrichtung nach Anspruch 8, wobei die ersten Übertragungssteuerinformationen der ersten Netzwerkvorrichtung in einer Medienzugriffssteuersignalisierung, MAC-Signalisierung, getragen werden.

## Revendications

1. Procédé de transmission de données, comprenant :
l'acquisition (S210), par un dispositif terminal, de premières informations de commande de transmission de chaque dispositif de réseau parmi une pluralité de dispositifs de réseau, dans lequel des premières informations de commande de transmission d'un premier dispositif de réseau parmi la pluralité de dispositifs de réseau sont utilisées pour indiquer qu'un état d'une fonction de transmission et de duplication de données configuré par le premier dispositif de réseau pour un premier support radio de données, DRB, est un état actif, et des premières informations de commande de transmission d'un second dispositif de réseau à l'exception du premier dispositif de réseau parmi la pluralité de dispositifs de réseau sont utilisées pour indiquer qu'un état de la fonction de transmission et de duplication de données configuré par le second dispositif de réseau pour le premier DRB est un état inactif ; et
la détermination (S220), par le dispositif terminal, d'un dispositif de réseau cible utilisé pour commander la fonction de transmission et de duplication de données du premier DRB en tant que premier dispositif de réseau en fonction des premières informations de commande de transmission de chaque dispositif de réseau, **caractérisé en ce que** le procédé comprend :
après que le dispositif terminal détermine que le dispositif de réseau cible utilisé pour commander la fonction de transmission et de duplication de données du premier DRB est le premier dispositif de réseau en fonction des informations de commande de transmission de chaque dispositif de réseau, le procédé comprenant en outre :
l'acquisition, par le dispositif terminal, de secondes informations de commande de transmission du premier dispositif de réseau, dans lequel les secondes informations de commande de transmission sont utilisées pour indiquer un état de la fonction de transmission et de duplication de données configuré par le premier dispositif de réseau pour le premier DRB ; et
la commande, par le dispositif terminal, de la fonction de transmission et de duplication de données du premier DRB en fonction des secondes informations de commande de transmission.

2. Procédé selon la revendication 1, dans lequel la commande, par le dispositif terminal, de la fonction de transmission et de duplication de données du premier DRB en fonction des secondes informations de commande de transmission, comprend :
la commande au premier DRB de transmettre des données non dupliquées lorsque l'état indiqué par les secondes informations de commande de transmission est un état inactif ; et
la commande au premier DRB de transmettre des données dupliquées lorsque l'état indiqué par les secondes informations de commande de transmission est un état actif.

3. Procédé selon la revendication 1, dans lequel les premières informations de commande de transmission du premier dispositif de réseau indiquent l'état de la fonction de transmission et de duplication de données configuré par le premier dispositif de réseau pour le premier DRB par le biais d'un premier bit dans une table de bits, et l'acquisition (S210), par le dispositif terminal, de premières informations de commande de transmission de chaque dispositif de réseau parmi la pluralité de dispositifs de réseau, comprend :
la réception, par le dispositif terminal, de la table de bits envoyée par le premier dispositif de réseau ; et la détermination, par le dispositif terminal, d'une valeur du premier bit correspondant au premier DRB dans la table de bits en tant que premières informations de commande de transmission du premier dispositif de réseau.

4. Procédé selon la revendication 3, dans lequel les premières informations de commande de transmission du premier dispositif de réseau sont acheminées dans une signalisation de commande d'accès au support, MAC.

5. Procédé selon l'une quelconque des revendications 1 à 4, dans lequel la pluralité de dispositifs de réseau comprend un dispositif de réseau dans un groupe de cellules primaires et un dispositif de réseau dans un groupe de cellules secondaires.

6. Dispositif terminal (400), comprenant :
une unité d'acquisition (410), configurée pour acquérir de premières informations de commande de transmission de chaque dispositif de réseau parmi une pluralité de dispositifs de réseau, dans lequel des premières informations de commande de transmission d'un premier dispositif de réseau parmi la pluralité de dispositifs de réseau sont utilisées pour indiquer qu'un état d'une fonction de transmission et de duplication de données configuré par le premier dispositif de réseau pour un premier support radio de données, DRB, est un état actif, et des premières informations de commande de transmission d'un second dispositif de réseau à l'exception du premier dispositif de réseau parmi la pluralité de dispositifs de réseau sont utilisées pour indiquer qu'un état de la fonction de transmission et de duplication de données configuré par le second dispositif de réseau pour le premier DRB est un état inactif ; et
une unité de détermination (420), configurée pour déterminer un dispositif de réseau cible utilisé pour commander la fonction de transmission et de duplication de données du premier DRB en tant que premier dispositif de réseau en fonction des premières informations de commande de transmission de chaque dispositif de réseau, **caractérisé en ce que** dans lequel l'unité d'acquisition (410) est spécifiquement configurée pour :
acquérir des secondes informations de commande de transmission du premier dispositif de réseau après l'acquisition des premières informations de commande de transmission du premier dispositif de réseau, dans lequel les secondes informations de commande de transmission sont utilisées pour indiquer un état de la fonction de transmission et de duplication de données configuré par le premier dispositif de réseau pour le premier DRB ; et le dispositif terminal comprend en outre : une unité de commande, configurée pour commander la fonction de transmission et de duplication de données du premier DRB en fonction des secondes informations de commande de transmission.

7. Dispositif terminal selon la revendication 6, dans lequel l'unité d'acquisition (410) est spécifiquement configurée pour :
commander au premier DRB de transmettre des données non dupliquées lorsque l'état indiqué par les secondes informations de commande de transmission est un état inactif ; et
commander au premier DRB de transmettre des données dupliquées lorsque l'état indiqué par les secondes informations de commande de transmission est un état actif.

8. Dispositif terminal selon la revendication 6 ou 7, dans lequel les premières informations de commande de transmission du premier dispositif de réseau indiquent l'état de la fonction de transmission et de duplication de données configuré par le premier dispositif de réseau pour le premier DRB par le biais d'un premier bit dans une table de bits, et l'unité d'acquisition (410) est spécifiquement configurée pour :
recevoir la table de bits envoyée par le premier dispositif de réseau ; et
déterminer une valeur du premier bit correspondant au premier DRB dans la table de bits en tant que premières informations de commande de transmission du premier dispositif de réseau.

9. Dispositif terminal selon la revendication 8, dans lequel les premières informations de commande de transmission du premier dispositif de réseau sont acheminées dans une signalisation de commande d'accès au support, MAC.
